# EUROPEAN PATENT APPLICATION

(11) **EP 2 213 258 A2**
(43) Date of publication of application: **04.08.2010**
(21) Application number: 10152171.4
(22) Date of filing: 29.01.2010
(51) Int. Cl.: A61C 8/00

(54) **Dental abutment with indentation for inhibition of crestal bone remodeling**

(30) Priority: 03.02.2009 IL 19687209
(71) Applicant: Mis-Implants Technologies Ltd, 201562 Misgav (IL)
(72) Inventor: Baruc, Daniel, 22441, Nahariya (IL); Weizman, Ran, 25147, Kfar Vradim (IL)
(74) Representative: McIlroy, Steven David

(57) **Abstract**

A dental abutment includes a projection for insertion into a cavity in the coronal portion of a dental implant. A coronal surface of the projection is adapted to be substantially flush with a coronal end of the implant when the projection is fully inserted into the cavity. A post extends in a substantially coronal direction from the coronal surface, wherein the perimeter of the post at the coronal surface is smaller than the perimeter of the coronal surface so as to form an indented shelf around the perimeter of the coronal surface.

## Description

### FIELD OF THE INVENTION

The present invention relates to dental prosthetics. More particularly, the present invention relates to a dental abutment with an indentation for inhibition of crestal bone remodeling.

### BACKGROUND OF THE INVENTION

An artificial tooth or dental prosthesis for tooth replacement is generally implanted in several stages. A dental implant is first implanted into the jaw. The implant is generally in the form of a screw that is screwed into a hole drilled into the jaw. The implant has a bored cavity along its length that is open at the coronal end. The implant may be constructed of titanium or another material that promotes bone growth. The purpose of the implant is to serve as an artificial root of the artificial tooth. The coronal end of the implant is generally positioned at or near the level of the bony crest on the coronal side of the jaw bone. Once implanted, the implant may be left in the jaw for a period of time. The opening at the coronal end of the implant may be covered with a temporary cover during this time. During this time, osseointegration may occur. During osseointegration, the bone of the jaw grows around the implant. Osseointegration may serve to anchor the implant in place.

Once osseointegration has occurred, the temporary cover is removed. A dental abutment may now be placed into the opening at the coronal end of the implant. A dental crown may be attached to a post on the coronal end of the dental abutment. Various designs of dental implants and abutments have been described. For example, Scholz (DE 10333013) describes an abutment held in place in the implant by means of a spring clip. Purga et al. (WO 2006/128620) describes a matching implant and abutment, in which the stem of the abutment includes a tapered section, a section with rotation preventing means, and a cylindrical guiding section. Pozzi (EP 1396236) describes an implant and abutment with a shank in the form of a tapered cone, designed to provide a seal against bacterial infiltration. Yamashita et al. (US 2008//0076092) describes an abutment coping with a clearance for gingival tissue.

It has been discovered that after the dental abutment has been placed in the implant, crestal bone remodeling occurs. In crestal bone remodeling, the level of the coronal bony crest of the jaw retreats in the apical direction, uncovering part of the coronal end of the implant. A process of platform switching has been described by Lazzara et al. ("Platform Switching: A New Concept in Implant Dentistry for Controlling Postrestorative Crestal Bone Levels," International Journal of Periodontics & Restorative Dentistry., vol. 26, pp. 9-17, 2006). Platform switching was found to prevent or reduce the amount of crestal bone remodeling. In process of platform switching, a dental abutment of a given diameter is inserted into a dental implant, where the bored cavity of the implant was designed to accept a wider diameter abutment. The mismatch in diameters forms an indented shelf or shoulder at the coronal end of the implant. It has been found that with platform switching, gum tissue growing into the indented shelf prevents crestal bone remodeling. However, a platform switching technique may result in an unstable or fragile connection between the abutment and the implant. Blackbeard in WO 2008/157138 describes a dental implant for asymmetrical abutment mounting, especially for replacement of an incisor or other anterior tooth. An opening and bore in the implant is laterally offset from a central axis of the implant. The lateral displacement of the abutment when mounted in the implant creates an indented shelf on the opposite side of the implant. Such an implant may require careful initial positioning.

It is an object of the present invention to provide a dental abutment that firmly attaches to a common dental implant, and that provides an indented shelf for the inhibition of crestal bone remodeling.

Other aims and advantages of the present invention will become apparent after reading the present invention and reviewing the accompanying drawings.

### SUMMARY OF THE INVENTION

There is thus provided, in accordance with some embodiments of the present invention, a dental abutment including: a projection for insertion into a cavity in the coronal portion of a dental implant, a coronal surface of the projection adapted to be substantially flush with a coronal end of the implant when the projection is fully inserted into the cavity, and a post extending in a substantially coronal direction from the coronal surface, wherein the perimeter of the post at the coronal surface is smaller than the perimeter of the coronal surface so as to form an indented shelf around the perimeter of the coronal surface.

Furthermore, in accordance with some embodiments of the present invention, the projection has a substantially constant polygonal perimeter along the length of the projection.

Furthermore, in accordance with some embodiments of the present invention, the substantially constant polygonal perimeter is a substantially constant hexagonal perimeter.

Furthermore, in accordance with some embodiments of the present invention, the coronal surface is wider than the substantially constant polygonal perimeter.

Furthermore, in accordance with some embodiments of the present invention, the distance from a point on the perimeter of the post at the coronal surface to the nearest point of the perimeter of the coronal surface is at least three millimeters.

Furthermore, in accordance with some embodiments of the present invention, the dental abutment includes a truncated conical section at the coronal end of the projection, wherein the coronal surface includes the larger base of the truncated conical section.

Furthermore, in accordance with some embodiments of the present invention, the dental abutment includes a central bore with a coronal opening and an apical opening at the apical end of the projection.

Furthermore, in accordance with some embodiments of the present invention, the coronal opening is wider than the apical opening.

Furthermore, in accordance with some embodiments of the present invention, the width of the apical opening is wider than the diameter of a shaft of a screw, and narrower than the diameter of a head of the screw, and wherein the width of the coronal opening is wider than the head of the screw.

Furthermore, in accordance with some embodiments of the present invention, the cross section of the post is in the form of a circular cylinder with a flat surface.

Furthermore, in accordance with some embodiments of the present invention, the surface of the post is grooved.

Furthermore, in accordance with some embodiments of the present invention, the post widens coronal to the coronal surface.

### BRIEF DESCRIPTION OF THE DRAWINGS

In order to better understand the present invention, and appreciate its practical applications, the following Figures are provided and referenced hereafter. It should be noted that the Figures are given as examples only and in no way limit the scope of the invention. Like components are denoted by like reference numerals.

Fig. 1 shows a dental abutment in accordance with embodiments of the present invention.

Fig. 2 is a partially sectioned view of the dental abutment shown in Fig. 1.

Fig. 3 shows the dental abutment of Fig. 1 as inserted into a dental implant.

### DETAILED DESCRIPTION OF EMBODIMENTS

In the following detailed description, numerous specific details are set forth in order to provide a thorough understanding of the invention. However, it will be understood by those of ordinary skill in the art that the invention may be practiced without these specific details. In other instances, well-known methods, procedures, components, modules, and/or units have not been described in detail so as not to obscure the invention.

A dental abutment in accordance with embodiments of the present invention is designed for insertion into a dental implant. The implant may have a generally cylindrical, or tapered cylindrical, shape. The outer surface of the implant may be provided with threading. The threading enables the apical end of the implant to be firmly implanted into a hole in the jaw bone (mandible or maxilla). The implant may have an internal elongated bored cavity along its central axis. The opening of the cavity is at the coronal end of the implant.

A projection of the dental abutment may extend from the apical end of the abutment. The projection is designed to be inserted into a matching section of a bored cavity of an implant. The shape and size of the outer perimeter of the projection may be constant along most of the length of the projection. The walls of at least part of the cavity of the implant may have a similar, though slightly larger, constant perimeter along the length of that part of the cavity. The perimeters of the projection and of the cavity walls may have a polygonal shape. A polygon shaped perimeter may serve to prevent rotation of the projection when inserted into the cavity. For example, the projection and cavity walls may have matching hexagonal perimeters.

At the coronal end of the projection, the abutment may taper outward from the projection in the form of a truncated circular cone. The larger base of the truncated conical section is coronal to the smaller base, and forms a coronal surface of the projection. The outward taper of the abutment may be designed to match a similar conical widening of the cavity walls. In this manner, the truncated conical section of the abutment serves to plug the opening of the cavity at the coronal end of the implant. Alternatively, the projection may maintain a constant perimeter along the entire length of the projection up to a coronal surface of the projection. The coronal surface of the projection may be designed such that when the projection of the abutment is inserted into the cavity of the implant, the coronal surface of the projection is flush with the coronal end of the implant. The coronal surfaces of the projection and the implant together form a substantially flat surface.

A base of a post extends outward from the coronal surface of the projection in the coronal direction. The post includes surfaces to which a dental crown may be affixed. The diameter of the post at the coronal surface of the projection is smaller than that of the coronal surface. Thus, the coronal surface of the projection forms an annular shelf surrounding the base of the post, along the outer perimeter of the coronal surface. The annular shelf, when situated near the bony crest of the jaw bone, may mimic the effects of platform switching. Thus, the annular shelf may inhibit crestal bone remodeling in the crestal bone surrounding an implanted implant and abutment in accordance with embodiments of the present invention.

Coronal to the base of the post, the post may be shaped in a manner known in the art as advantageous for affixing a dental crown. For example, the post may taper outward from its base. At a plane coronal to the wide base, the diameter of the post may taper out to a maximum value. Beyond the plane of maximum diameter, in the coronal direction, the post may then taper inward, may maintain a constant perimeter, may take an asymmetric form, or may be shaped as any other type of abutment post as known in the art.

A central bore extends along the axis of the abutment. An apical part of the bore ends in an opening at the apical end of the abutment, at the apical end of the projection. The apical part of the bore has sufficient diameter to accommodate the shaft of a screw, but not its head. A coronal part of the bore starts near the coronal end of the apical part, and ends in a coronal opening. When the abutment post is aligned collinear with the projection, the coronal opening may be located at the coronal end of the post. Alternatively, the coronal opening may be located at another point of the post, or in another part of the abutment coronal to the projection. The diameter of the coronal part is sufficient to accommodate the head of the screw and an appropriate screwdriver or other tightening tool. Thus, a screw may be inserted into the opening in the coronal end of the abutment such that the shaft of the screw extends outward through the opening at the apical end of the bore. The shaft of the screw may then insert into a tapped bore at the apical end of the cavity of the implant into which the projection of the abutment is inserted. Tightening the screw into the tapped bore may then fasten the abutment to the shaft.

Reference is now made to the accompanying figures.

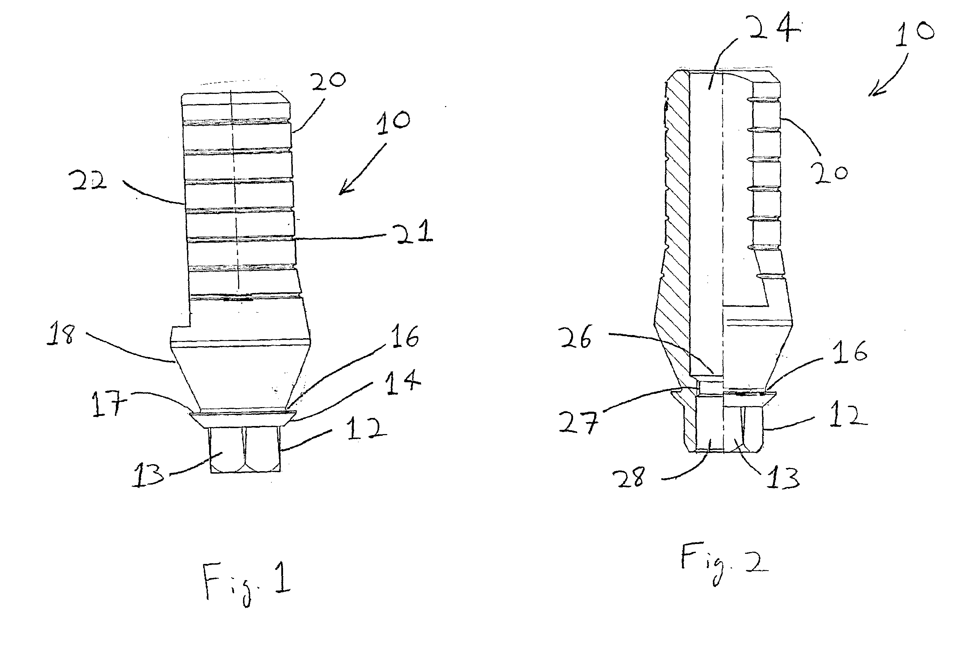

Fig. 1 shows a dental abutment in accordance with embodiments of the present invention. An apical portion of dental abutment 10 includes projection 12. A coronal portion of dental abutment 10 includes post 20. The perimeter of projection 12 is constant along the length of projection 12, and has a polygonal shape (hexagonal in this example) or other shape that matches a corresponding bore inside a corresponding dental implant. Facets 13 of projection 12 are arranged hexagonally about the perimeter of projection 12. Adjacent to the coronal end of projection 12 is truncated conical section 14. Truncated conical section 14 has a circular perimeter that increases in diameter from a smaller base at the apical end of truncated conical section 14 to a larger base at its coronal end. Tapered section 18 extends from coronal surface 17 of truncated conical section 14. The diameter of the base of tapered section 18, i.e. the part of tapered section 18 adjacent to coronal surface 17, is less than that of coronal surface 17. Thus, the base of tapered section 18 and coronal surface 17 form indentation 16. The section of coronal surface 17 external to indentation 16 forms an annular flat shelf. Tapered section 18 extends in the coronal direction, tapering outward and then inward. Post 20 extends from the coronal end of tapered section 18. Post 20 has approximately constant perimeter shape and size along most of the length of post 20. Post 20 may be shaped so as to facilitate attachment of a dental crown. For example, post 20 may be in the general form of a cylinder cut by a plane perpendicular to a cylinder radius and parallel to the cylinder axis, forming flat surface 22 (the cross section being in the form of a circle that is missing a segment). The surface of post 20 may be grooved, for example, including circular grooves 21.

Various abutments with variously shaped and configured posts may be provided. Such various configurations are known in the art. A post configuration may be designed for use with a particular type of crown.

Fig. 2 is a partially sectioned view of the dental abutment shown in Fig. 1. Coronal bore 24 is open at the coronal end of dental abutment 10. Coronal bore 24 extends from the coronal end of post 20 along the central axis of dental abutment 10 to surface 26. Beyond surface 26, the bore continues with narrowed diameter through neck 27 and apical bore 28 to the apical end of projection 12. Apical bore 28 is open at the apical end of dental abutment 10. A screw with a shaft narrower than neck 27 and with head wider than neck 27 may be inserted into coronal bore 24 with its head at the coronal end. The head may then be inserted to surface 26. The shaft of the screw may extend through neck 27 and apical bore 28 out of the apical end of apical bore 28.

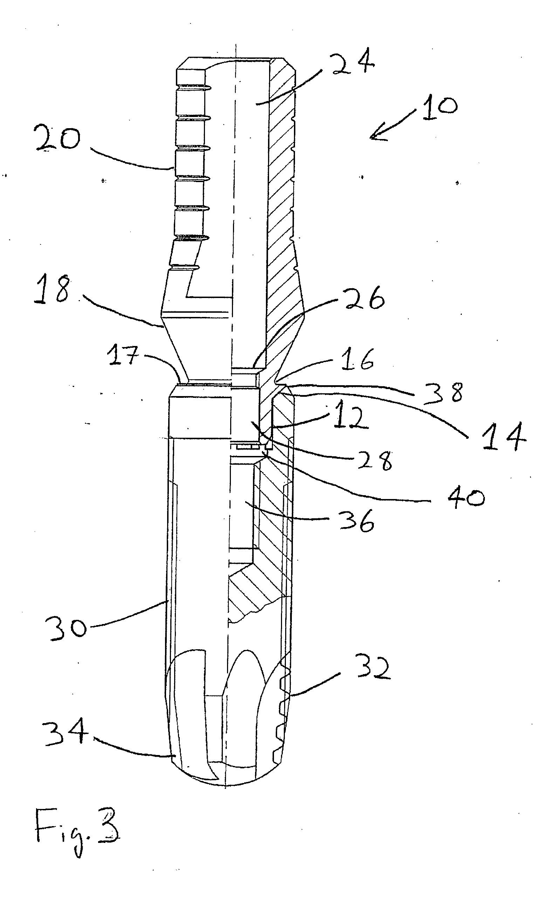

Fig. 3 shows the dental abutment of Fig. 1 as inserted into a dental implant. Dental implant 30 may be implanted in the bone of a jaw. In general, coronal end 38 of dental implant 30, when dental implant 30 is implanted into a jaw bone, may be positioned at, or within a few millimeters of, the bony crest of the jaw. Thus, all or most of an implanted dental implant 30 may be apical to the bony crest. Projection 12 of dental abutment 10 may be inserted into the coronal end of dental implant 30. When inserted into an implanted dental implant 30, all or most of tapered section 18 and post 20 may extend out of the bony crest into the gum and mouth cavity.

The outer surface of dental implant 30 is provided with threading 32. Threading 32 may enable or facilitate firm attachment of dental implant 30 to the jaw bone. The threading may cover all or part of the outer surface of dental implant 30. The outer surface of the apical end of dental implant 30 may be provided with scallops 34. Scallops 34 may enable the implantation of the apical end of dental implant 30 where particles of jaw bone remain.

Projection 12 of dental abutment 10 inserts into cavity 40 of dental implant 30. The projection 12 has a shape and size designed to match that of cavity 40. For example, if the walls of cavity 40 form a hexagonal perimeter, projection 12 is also shaped with hexagonally arranged facets 13. A matched hexagonal, or other polygonal, shape of the perimeters of the projection and of the cavity prevent rotation of the abutment about its axis. Abutments with variously shaped and configured projections may be designed to match various cavity configurations of commercially available dental implants.

As shown in Fig. 3, coronal surface 17 of truncated conical section 14 is approximately flush with coronal end 38 of dental implant 30. In general, when dental implant 30 is implanted into a jaw, coronal end 38 is at, or within a few millimeters of, the bony crest of the jaw. Indentation 16 may then provide a shelf on coronal surface 17 that may mimic platform switching. For example, the annular width of indentation 16 and the shelf, that is, the distance between a point on indentation 16 and the nearest point on the perimeter of coronal surface 17, may be in the range of about 3 mm to 4 mm. This configuration of coronal surface 17 and indentation 16 at, or near, the bony crest, provides a location for growth of gingival tissue and may prevent crestal bone remodeling surrounding dental implant 30.

Dental implant 30 may be provided with a tapped bore 36 at the apical end of cavity 40. A shaft of a screw that was inserted into coronal bore 24 of dental abutment 10 may extend into tapped bore 36. The shaft of the screw may be screwed into tapped bore 36 and tightened until the head of the screw is flush against surface 26. The diameter of coronal bore 24 is sufficient to enable the insertion of a screwdriver of other screw tightening tool.

Thus, a dental abutment is provided that may be inserted into a standard dental implant, that provides a post to which a crown may be attached, and that provides an indented shelf near the top of the implant for the inhibition of crestal bone remodeling.

It should be clear that the description of the embodiments and attached Figures set forth in this specification serves only for a better understanding of the invention, without limiting its scope.

It should also be clear that a person skilled in the art, after reading the present specification could make adjustments or amendments to the attached Figures and above described embodiments that would still be covered by the present invention.

## Claims

1. A dental abutment comprising:
a projection for insertion into a cavity in the coronal portion of a dental implant, a coronal surface of the projection adapted to be substantially flush with a coronal end of the implant when the projection is fully inserted into the cavity; and
a post extending in a substantially coronal direction from the coronal surface, wherein the perimeter of the post at the coronal surface is smaller than the perimeter of the coronal surface so as to form an indented shelf around the perimeter of the coronal surface.

2. A dental abutment as claimed in claim 1, wherein the projection has a substantially constant polygonal perimeter along the length of the projection.

3. A dental abutment as claimed in claim 2, wherein the substantially constant polygonal perimeter is a substantially constant hexagonal perimeter.

4. A dental abutment as claimed in claim 2, wherein the coronal surface is wider than the substantially constant polygonal perimeter.

5. A dental abutment as claimed in claim 1, wherein the distance from a point on the perimeter of the post at the coronal surface to the nearest point of the perimeter of the coronal surface is at least three millimeters.

6. A dental abutment as claimed in claim 1, comprising a truncated conical section at the coronal end of the projection, wherein the coronal surface comprises the larger base of the truncated conical section.

7. A dental abutment as claimed in claim 1, comprising a central bore with a coronal opening and an apical opening at the apical end of the projection.

8. A dental abutment as claimed in claim 7, wherein the coronal opening is wider than the apical opening.

9. A dental abutment as claimed in claim 8, wherein the width of the apical opening is wider than the diameter of a shaft of a screw, and narrower than the diameter of a head of the screw, and wherein the width of the coronal opening is wider than the head of the screw.

10. A dental abutment as claimed in claim 1, wherein cross section of the post is in the form of a circular cylinder with a flat surface.

11. A dental abutment as claimed in claim 1, wherein the surface of the post is grooved.

12. A dental abutment as claimed in claim 1, wherein the post widens coronal to the coronal surface.
